# EUROPÄISCHE PATENTSCHRIFT

(11) **EP 1 577 271 B1**
(45) Veröffentlichungstag und Bekanntmachung des Hinweises auf die Patenterteilung: **10.04.2013**
(21) Anmeldenummer: 05000216.1
(22) Anmeldetag: 07.01.2005
(51) Int. Cl.: C03B 9/453

(54) **Schubvorrichtung zur Überführung von Glasartikeln von einer Station einer IS-Glasmaschine auf ein Fördermittel**
Transfer mechanism for glass articles from a station of an IS machine to a conveyor
Méchanisme de transfert d'articles de verre d'une section d'une machine IS vers un convoyeur

(30) Priorität: 19.03.2004 DE 102004013518
(43) Veröffentlichungstag der Anmeldung: 21.09.2005
(73) Patentinhaber: GPS GLASPRODUKTIONS-SERVICE GMBH, 45329 Essen (DE)
(72) Erfinder: Blaskowitz, Wolfgang, D-45891 Gelsenkirchen (DE); Berger, Jürgen, D-45899 Gelsenkirchen (DE)
(74) Vertreter: Lelgemann, Karl-Heinz

(56) Entgegenhaltungen:
- EP-A- 0 270 258
- WO-A-2005/085145
- CZ-B- 288 848
- DE-A1- 4 231 454
- US-A- 5 575 828
- US-A- 5 818 190
- US-A1- 2005 193 773
- US-A1- 2005 199 011

## Beschreibung

Die Erfindung bezieht sich auf eine Schubvorrichtung zur Überführung von Glasartikeln von einer Station einer IS-Glasmaschine auf ein Fördermittel nach den Oberbegriff des Patentanspruchs 1.

Bei der Überführung von Glasartikeln von der Station der IS-Glasmaschine, wobei die Glasartikel eine Temperatur von 600 bis 700 Grad C aufweisen, kommt es aufgrund mangelnder Synchronisierung zwischen der Bewegung der Schubvorrichtung und der Bewegung der die Glasartikel aufnehmenden Fördereinrichtung vergleichsweise häufig dazu, dass die Glasartikel beschädigt werden. Hierdurch wird in unerwünschter Weise der Ausschuss erhöht, wobei darüber hinaus aufgrund etwaig zerstörter Glasartikel Störungen im Betriebsablauf auftreten können.

Die gemäß Art. 54, Abs. 3, 4 als Stand der Technik geltenden US 2005/199 011 A1 und US 2005/193 773 A1 zeigen Antriebsvorrichtungen derartiger Schubvorrichtungen.

Aus der CZ-A3-9 603 047 ist eine Schubvorrichtung zur Überführung von Glasartikeln von einer Station einer IS-Glasmaschine auf ein Fördermittel bekannt, bei der ein Verschiebeglied vorgesehen ist, das in Anlage an die zu überführenden Glasartikel bringbar ist. Mittels dieses Verschiebeglieds sind des weiteren die Glasartikel von einer der Station zugeordneten Platte auf das als Förderband ausgebildete Fördermittel stellbar. Das Verschiebeglied wird mittels Stellteilen in Form von Zapfen, Kurbelarmen etc. bewegt, die unmittelbar mit dem Verschiebeglied verbunden sind. Zu der Schubvorrichtung gehört eine Antriebsvorrichtung, mittels der das Verschiebeglied über die vorstehend erwähnten Stellteile angetrieben wird. Die Antriebsvorrichtung der bekannten Schubvorrichtung ist des weiteren in eine erste Antriebsstufe und in eine zweite Antriebsstufe aufgeteilt. Mittels der ersten Antriebsstufe werden die unmittelbar mit dem Verschiebeglied verbundenen Stellteile angetrieben. Die zweite Antriebsstufe ist neben der ersten Antriebsstufe angeordnet und treibt einen Träger an, auf dem seinerseits die Stellteile, die mittels der ersten Antriebsstufe angetrieben werden, gehaltert sind.

Die beiden Antriebsstufen der Antriebsvorrichtung der bekannten Schubvorrichtung sind in Vertikalrichtung zueinander versetzt angeordnet und sind jeweils mit einem der jeweiligen Antriebsstufe zugeordneten Gehäuse versehen. Zu beiden Antriebseinheiten bzw. Antriebsstufen gehört jeweils eine Motor- und eine Getriebeeinheit, wobei ausgangsseitig der jeweiligen Getriebeeinheit das Antriebsritzel der jeweiligen Antriebseinheit bzw. Antriebsstufe sitzt.

Ausgehend von dem vorstehend geschilderten Stand der Technik liegt der Erfindung die Aufgabe zugrunde, die gattungsgemäße Schubvorrichtung zur Überführung von Glasartikeln von einer Station einer IS-Glasmaschine auf ein Fördermittel derart weiterzubilden, dass zum einen eine möglichst genaue Umsetzung der in den Antriebsstufen erzeugten Bewegungsenergien in den Bewegungsablauf des Verschiebeglieds gewährleistet ist, dass eine im Vergleich zum Stand der Technik höhere Genauigkeit und Reproduzierbarkeit der durchgeführten Bewegungsabläufe realisiert werden kann und dass eine kompakte Gestaltung der Antriebsvorrichtung ermöglicht wird, die den beengten räumlichen Verhältnissen am Einsatzort derartiger Antriebsvorrichtungen genügt.

Diese Aufgabe wird erfindungsgemäß dadurch gelöst, dass die erste Antriebsstufe einen Servomotor aufweist, der getriebelos mit einem Antriebsglied der unmittelbar mit dem Verschiebeglied verbundenen Stellteile verbunden ist, dass die zweite Antriebsstufe einen Servomotor aufweist, der getriebelos mit einem Antriebsglied des Trägers verbunden ist, und dass beide Antriebsstufen in einem ihnen gemeinsamen Gehäuse angeordnet sind. Durch die Ausgestaltung beider Antriebsstufen als getriebelose Servomotoren läßt sich die gewünschte höhere Genauigkeit und Reproduzierbarkeit der Bewegungsabläufe erzielen.

Der Betrieb der beiden die Antriebseinrichtung der erfindungsgemäßen Schubvorrichtung bildenden Antriebsstufen kann so aufeinander abgestimmt werden, dass die Verschiebebewegung der Glasartikel auf das Fördermittel in einer Weise realisiert wird, bei der der Glasartikel bei seinem Übergang auf das Fördermittel bereits mehr oder weniger mit der Geschwindigkeit des Fördermittels sich bewegt. Beschädigungen von mehreren gleichzeitig auf das Förderband verschobenen Glasartikeln können im Falle der erfindungsgemäßen Schubvorrichtung weitestgehend ausgeschlossen werden. Hierdurch wird ein störungsfreierer Betrieb der IS-Glasmaschine und der vor- und nachgeschalteten Anlagen ermöglicht.

Es ist sichergestellt, dass die Antriebsenergie der Servomotoren exakt in den Bewegungsablauf des Verschiebeglieds bzw. des Trägers umgesetzt wird.

Gemäß einer vorteilhaften Ausführungsform der erfindungsgemäßen Schubvorrichtung sind die am Träger gehalterten Stellteile des Verschiebeglieds mittels der ersten Antriebsstufe während der Überführung eines Glasartikels von der Station zum Fördermittel kontinuierlich in die eine Richtung drehbar und ist der Träger mittels der zweiten Antriebsstufe während der Überführung eines Glasartikels von der Station zum Fördermittel in einer ersten Bewegungsphase in die eine Richtung und in einer zweiten Bewegungsphase in die andere, entgegengesetzte Richtung dreh- bzw. schwenkbar, wobei die Drehung der Stellteile und die Drehung bzw. Schwenkung des Trägers während der beiden Bewegungsphasen desselben einander überlagern.

Eine Abgangswelle des Servomotors der ersten Antriebsstufe ist zweckmäßigerweise koaxial in einer mittels des Servomotors der zweiten Antriebsstufe angetriebenen Hohlwelle angeordnet, in Bezug auf diese Hohlwelle rotierbar und sie steht an deren elektromotorfernen Stirnseite durch diese vor, wobei sie an ihrem derart vorstehenden Ende drehfest mit einem das Antriebsglied der unmittelbar mit dem Verschiebeglied verbundenen Stellteile bildenden Antriebszahnrad verbunden ist.

Zweckmäßigerweise treibt das drehfest mit der Abgangswelle des Servomotors der ersten Antriebstufe verbundene Antriebszahnrad mittels eines Zahnriemens zumindest zwei Abtriebszahnräder an, von denen jedes drehfest mit einem mittels eines Kurbelarms mit dem Verschiebeglied verbundenen Wellenzapfen verbunden ist.

Der Träger kann vorteilhaft ein Gehäuse für das Antriebszahnrad der ersten Antriebsstufe, den Zahnriemen und die zumindest zwei Abtriebszahnräder ausbilden.

Eine Abgangswelle des Servomotors der zweiten Antriebsstufe ist zweckmäßigerweise entsprechend drehfest mit einem Antriebszahnrad verbunden, das mittels eines Zahnriemens in Antriebsverbindung mit einem drehfest auf der Hohlwelle sitzenden Abtriebszahnrad ist.

Die Hohlwelle ihrerseits ist vorteilhaft exzentrisch und drehfest mit dem Träger verbunden, wobei dieser mittels der Hohlwelle entsprechend der Drehrichtung der Abgangswelle des Servomotors der zweiten Antriebsstufe in die eine bzw. die andere Richtung schwenkbar ist.

Vorteilhaft können beide Antriebsstufen sowohl in ihrer Axial- als auch in ihrer Radialrichtung dieselben Abmessungen aufweisen.

Die erfindungsgemäße Schubvorrichtung ist an vorhandene IS-Glasmaschinen universell montierbar, wobei sie sowohl als linke (LH) als auch als rechte (RH) Ausführungsform gestaltbar ist.

Die Steuereinheit der erfindungsgemäßen Schubvorrichtung ist vorteilhaft direkt in eine Steuerungsvorrichtung der IS-Glasmaschine integrierbar, derart, dass Geschwindigkeits- bzw. Taktänderungen der IS-Glasmaschine unmittelbar und automatisch in dementsprechende Anpassungen und Änderungen des Bewegungsablaufs der Schubvorrichtung resultieren, wobei die Anpassung bzw. Änderung des Bewegungsablaufs durch entsprechende Eingriffe in die Steuerung der ersten und der zweiten Antriebsstufe der Antriebsvorrichtung realisiert werden können.

Aus Gründen der Betriebssicherheit ist es zweckmäßig, wenn die Schubvorrichtung eine elektronische Drehkraftbegrenzung für die erste und/oder die zweite Antriebsstufe aufweist.

Zur Vereinfachung der Bedienung kann die Steuereinheit der erfindungsgemäßen Schubvorrichtung als Eingabeelemente Touch-Screens aufweisen.

Im folgenden wird die Erfindung anhand einer Ausführungsform unter Bezugnahme auf die Zeichnung näher erläutert.

Es zeigen:
- Figur 1: eine perspektivische Darstellung einer Ausführungsform der erfindungsgemäßen Schubvorrichtung zur Überführung von Glasartikeln von einer Station einer IS-Glasmaschine auf ein Fördermittel;
- Figur 2: einen Längsschnitt durch die in Figur 1 gezeigte Ausführungsform der erfindungsgemäßen Schubvorrichtung; und
- Figur 3: einen Querschnitt durch die in Figur 1 gezeigte Ausführungsform der erfindungsgemäßen Schubvorrichtung.

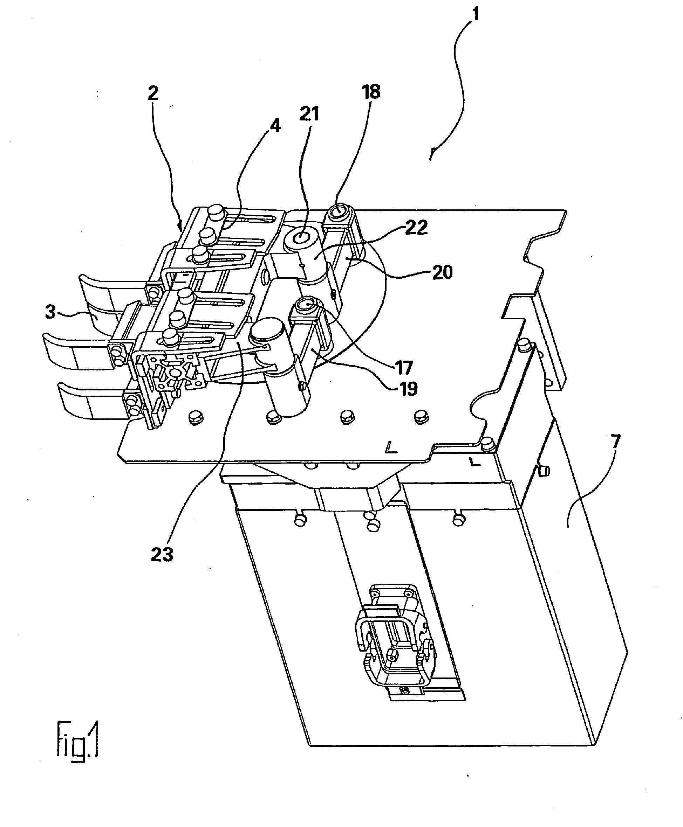

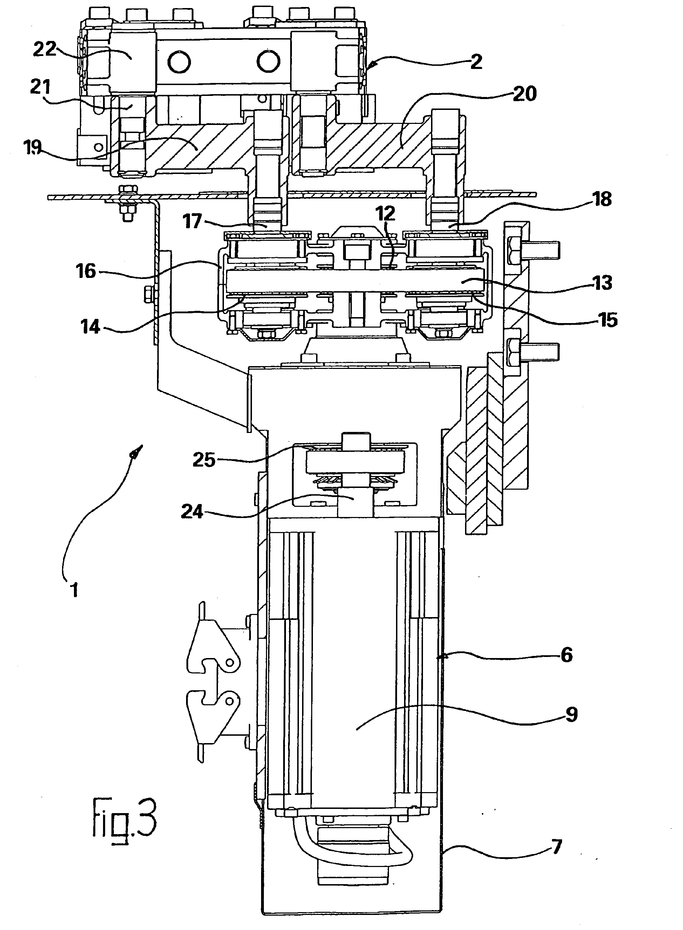

Eine anhand der Figuren 1 bis 3 dargestellte Ausführungsform einer erfindungsgemäßen Schubvorrichtung 1 dient dazu, Glasartikel, die 600 bis 700 Grad C heiß sind, aus einer Station einer IS-Glasmaschine auf ein Fördermittel, z.B. ein Transportband, zu schieben, mittels dem die Glasartikel von der betreffenden Station der IS-Glasmaschine entfernt werden.

Zu der Schubvorrichtung 1 gehört ein Verschiebeglied 2 mit Schubfingern 3, die, wie sich am besten aus Figur 1 ergibt, gebogen und geteilt ausgebildet sein können, um einen besseren Zugriff auf die zu verschiebenden Glasartikel ausüben zu können. Mittels verstellbarer Fixiereinrichtungen 4 kann das Verschiebeglied 2 an unterschiedliche Abmessungen aufweisende, zu verschiebende Glasartikel angepasst werden.

Die zur Durchführung der Verschiebung erforderliche Bewegung des Verschiebeglieds 2 bzw. der Schubfinger 3 wird durch eine Antriebsvorrichtung 5, 6 erzeugt, zu der eine erste Antriebsstufe 5 und eine zweite Antriebsstufe 6 gehören.

Die beiden Antriebsstufen 5, 6 sind in einem ihnen gemeinsamen Gehäuse 7 nebeneinander angeordnet. Die Abmessungen der beiden Antriebsstufen 5, 6 bzw. der beiden Servomotoren 8, 9 der beiden Antriebsstufen 5, 6 entsprechen einander in Radial- und in Axialrichtung.

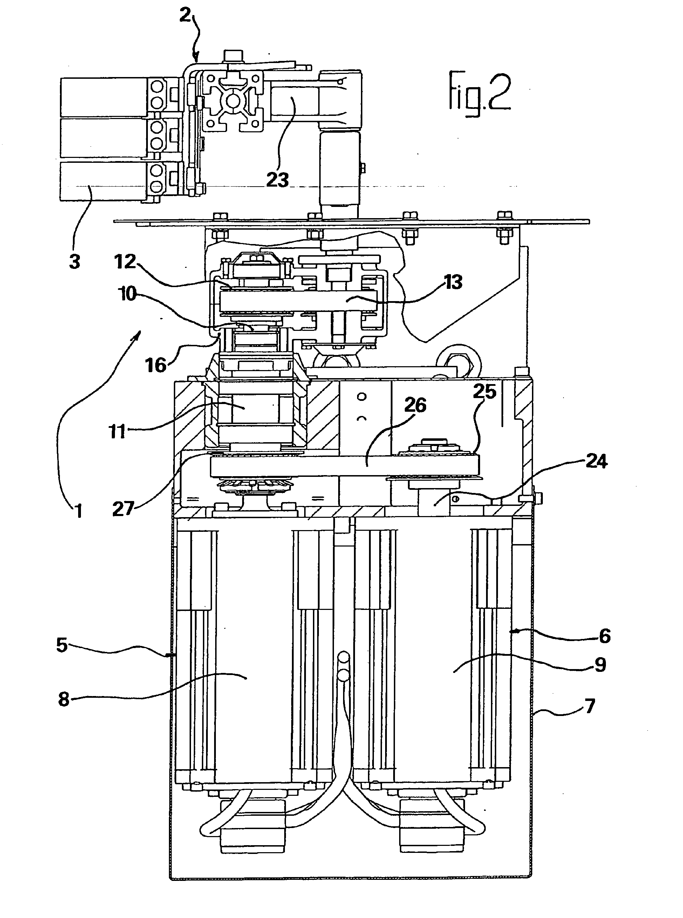

Der Servomotor 8 der ersten Antriebsstufe 5, der in Figur 2 links im Gehäuse 7 angeordnet ist, hat eine Abgangswelle 10, die eine mit der zweiten Antriebsstufe 6 in Antriebsverbindung befindliche Hohlwelle 11 in Axialrichtung an deren distaler Stirnseite überragt und die rotierbar in Bezug auf die Hohlwelle 11 angeordnet ist. An ihrem die Hohlwelle 11 durchragenden Endabschnitt trägt die Abgangswelle 10 des Servomotors 8 der ersten Antriebsstufe 5 ein Antriebszahnrad 12, welches im in den Figuren 1 bis 3 dargestellten Ausführungsbeispiel der Schubvorrichtung 1 über einen Zahnriemen 13 mit Abtriebszahnrädern 14 und 15 in Antriebsverbindung steht.

Das von der Abgangswelle 10 des Servomotors 8 der ersten Antriebsstufe angetriebene Antriebszahnrad 12, der dieses umschlingende Zahnriemen 13 sowie die über den Zahnriemen 13 mit dem Antriebszahnrad 12 in Antriebsverbindung stehenden Abtriebszahnräder 14, 15 sind an bzw. in einem als Gehäuse ausgebildeten Träger 16 gelagert.

Jedes der beiden Abtriebszahnräder 14, 15 ist drehfest mit einem Wellenzapfen 17 bzw. 18 verbunden. Jeder der beiden Wellenzapfen 17, 18 hat einen Kurbelarm 19 bzw. 20, der entsprechend der Drehung des Wellenzapfens 17, 18 eine Schenkbewegung ausführt. Die beiden Kurbelarme 19, 20 sind an ihren wellenzapfenfernen Enden mit Drehzapfen 21 versehen, die drehbar entsprechende Lagerhülsen 22 von Stellarmen 23 lagern, die fest mit dem Verschiebeglied 2 und damit den Schubfingern 3 verbunden sind.

Mit den vorstehend erwähnten Wellenzapfen 17, 18, Kurbelarmen 19, 20, Drehzapfen 21, Lagerhülsen 22 und Stellarmen 23 wird die auf die Wellenzapfen 17, 18 übertragene Rotationsbewegung der Abgangswelle 10 der ersten Antriebsstufe 5 in eine Schwenkbewegung des Verschiebeglieds 2 bzw. der an diesem vorgesehenen Schubfinger 3 umgesetzt, die Teil desjenigen Bewegungsablaufs ist, mittels dem die Glasartikel auf das Förderband verschoben werden. Eine weitere Komponente dieses Bewegungsablaufs wird mittels einer Schwenkbewegung des Trägers 16 realisiert, in Bezug auf den die Wellenzapfen 17, 18 ortsfest angeordnet sind.

Zur Erzeugung der Schwenkbewegung des Trägers 16 dient die zweite Antriebsstufe 6 der Antriebseinrichtung 5, 6. Eine Abgangswelle 24 des Servomotors 9 der zweiten Antriebsstufe 6 trägt an ihrem freien Ende ein Antriebszahnrad 25, das über einen Zahnriemen 26 mit einem Abtriebszahnrad 27 in Antriebsverbindung steht, das drehfest auf der von der Abgangswelle 10 des Servomotors 8 der ersten Antriebsstufe durchragten Hohlwelle 11 sitzt. Die Hohlwelle 11 ist somit mittels der zweiten Antriebsstufe 6 mit einer Rotationsbewegung beaufschlagbar.

An ihrem zum Abtriebszahnrad 27 entgegengesetzten Ende ist die Hohlwelle 11 drehfest mit dem Träger 16 verbunden. Die Hohlwelle 11 ist in Bezug auf den Träger 16 exzentrisch angeordnet, so dass mittels einer Drehung der Hohlwelle 11 in der einen Richtung der Träger 16 in eine entsprechende Richtung schwenkbar ist, wobei eine Drehung der Hohlwelle 11 in die andere Richtung eine Schwenkung des Trägers 16 in die entsprechend entgegengesetzte Richtung zur Folge hat.

Bei einer Verschiebung von Glasartikeln auf das Transportband führen die fest mit den Wellenzapfen 17, 18 verbundenen Kurbelarme 19, 20 eine Drehung bzw. Schwenkung von 360 Grad aus, bis sie ihre Ausgangsposition wieder erreichen.

Der Träger 16 wird mittels der zweiten Antriebsstufe der Antriebseinrichtung zunächst um ca. 90 Grad in die eine Richtung verschwenkt, und danach um 90 Grad in die andere Richtung verschwenkt, bis er seine Ausgangsposition wieder einnimmt. Die Verschwenkung des Trägers 16 in die eine Richtung beginnt etwa in dem Augenblick, wenn die Schubfinger 3 des Verschiebeglieds 2 in Anlage an die zu verschiebenden Glasartikel geraten. Die Schwenkbewegung des Trägers 16 in die andere, entgegengesetzte Richtung findet statt, wenn die Schubfinger des Verschiebeglieds 2 nach dem Verschieben der Glasartikel auf das Förderband außer Anlage mit den Glasartikeln sind.

Die vorstehend geschilderte Schubvorrichtung 1 ist an vorhandene IS-Glasmaschinen universell montierbar. Die Schubvorrichtung kann für alle Produktionsweisen (SG, DG, TG) und alle Mittenabstände (4,25", 5", 5,5", 6", 6,25") eingesetzt werden. Die gleiche Schubvorrichtung 1 ist für LH- und RH-Ausführungen einsetzbar.

Zur Schubvorrichtung 1 gehört eine Steuereinheit, die direkt in eine Steuerungsvorrichtung der IS-Glasmaschine integrierbar ist. Hierdurch ist es möglich, dass an der IS-Glasmaschine vorgenommene Geschwindigkeits- bzw. Taktänderungen unmittelbar und automatisch in dementsprechende Anpassungen und Änderungen des Bewegungsablaufs der Schubvorrichtung 1 bzw. des Betriebs der beiden Antriebsstufen 5, 6 derselben umgesetzt werden. Aus Gründen der Betriebssicherheit ist die Steuereinheit der Schubvorrichtung 1 mit einer elektronischen Drehkraftbegrenzung für die Antriebseinrichtung 5, 6 versehen.

Der Steuereinheit ist des weiteren ein Touch-Screen zugeordnet, mittels dem eine benutzerfreundliche Bedienung der Steuereinheit möglich ist.

## Patentansprüche

1. Schubvorrichtung zur Überführung von Glasartikeln von einer Station einer IS-Glasmaschine auf ein Fördermittel, mit einem Verschiebeglied (2), das in Anlage an die zu überführenden Glasartikel bringbar und mittels dem die Glasartikel von der Station auf das Fördermittel stellbar sind, Stellteilen (17 bis 23), die unmittelbar mit dem Verschiebeglied (2) verbunden sind, und einer Antriebsvorrichtung (5, 6), mittels der das Verschiebeglied (2) über die Stellteile (17 bis 23) antreibbar ist, wobei die Antriebsvorrichtung (5, 6) eine erste Antriebsstufe (5), mittels der die unmittelbar mit dem Verschiebeglied (2) verbundenen Stellteile (17 bis 23) antreibbar sind, und eine zweite Antriebsstufe (6) aufweist, die neben der ersten Antriebsstufe (5) angeordnet ist und mittels der ein die unmittelbar mit dem Verschiebeglied (2) verbundenen Stellteile (17 bis 23) halternder Träger (16) antreibbar ist, **dadurch gekennzeichnet, dass** die erste Antriebsstufe (5) einen Servomotor (8) aufweist, der getriebelos mit einem Antriebsglied (12) der unmittelbar mit dem Verschiebeglied (2) verbundenen Stellteile (17 bis 23) verbunden ist, dass die zweite Antriebsstufe (6) einen Servomotor (9) aufweist, der getriebelos mit einem Antriebsglied (25) des Trägers (16) verbunden ist, und dass beide Antriebsstufen (5, 6) in einem ihnen gemeinsamen Gehäuse (7) angeordnet sind.

2. Schubvorrichtung nach Anspruch 1, bei der die am Träger (16) gehalterten Stellteile (17 bis 23) des Verschiebeglieds (2) mittels der ersten Antriebsstufe (5) während der Überführung eines Glasartikels von der Station zum Fördermittel kontinuierlich in eine Richtung drehbar sind und der Träger (16) mittels der zweiten Antriebsstufe (6) während der Überführung eines Glasartikels von der Station zum Fördermittel in einer ersten Bewegungsphase in die eine Richtung und in einer zweiten Bewegungsphase in die andere, entgegengesetzte Richtung dreh- bzw. schwenkbar ist, wobei die Drehung der Stellteile (17 bis 23) und die Drehung des Trägers (16) während der beiden Bewegungsphasen desselben einander überlagern.

3. Schubvorrichtung nach Anspruch 1 oder 2, bei der eine Abgangswelle (10) des Servomotors (8) der ersten Antriebsstufe (5) koaxial in einer mittels des Servomotors (9) der zweiten Antriebsstufe (6) angetriebenen Hohlwelle (11) angeordnet ist, in Bezug auf die Hohlwelle (11) rotierbar ist, an deren elektromotorfernen Stirnseite durch diese vorsteht und drehfest mit einem das Antriebsglied (12) der unmittelbar mit dem Verschiebeglied (2) verbundenen Stellteile (17 bis 23) bildenden Antriebszahnrad (12) verbunden ist.

4. Schubvorrichtung nach Anspruch 3, bei der das drehfest mit der Abgangswelle (10) des Servomotors (8) der ersten Antriebsstufe (5) verbundene Antriebszahnrad (12) mittels eines Zahnriemens (13) zumindest zwei Abtriebszahnräder (14, 15) antreibt, von denen jedes drehfest mit einem mittels eines Kurbelarms (19, 20) mit dem Verschiebeglied (2) verbundenen Wellenzapfen (17, 18) verbunden ist.

5. Schubvorrichtung nach Anspruch 6, bei der der Träger (16) ein Gehäuse für das Antriebszahnrad (12) der ersten Antriebsstufe (5), den Zahnriemen (13) und die zumindest zwei Abtriebszahnräder (14, 15) ausbildet.

6. Schubvorrichtung nach einem der Ansprüche 3 bis 5, bei der eine Abgangswelle (24) des Servomotors (9) der zweiten Antriebsstufe (6) drehfest ein Antriebszahnrad (25) trägt, das mittels eines Zahnriemens (26) in Antriebsverbindung mit einem drehfest auf der Hohlwelle (11) sitzenden Abtriebszahnrad (27) ist.

7. Schubvorrichtung nach einem der Ansprüche 3 bis 6, bei der die Hohlwelle (11) exzentrisch und drehfest mit dem Träger (16) verbunden und dieser mittels der Hohlwelle (11) entsprechend der Drehrichtung der Abgangswelle (24) des Servomotors (9) der zweiten Antriebsstufe (6) in die eine bzw. die andere Richtung schwenkbar ist.

8. Schubvorrichtung nach einem der Ansprüche 1 bis 7, deren beide Antriebsstufen (5, 6) in ihrer Axial- und/oder Radialrichtung dieselben Abmessungen aufweisen.

9. Schubvorrichtung nach einem der Ansprüche 1 bis 8, die an vorhandene IS-Glasmaschinen universell montierbar ist.

10. Schubvorrichtung nach einem der Ansprüche 1 bis 9, die als linke und rechte Ausführungsform gestaltbar ist.

11. Schubvorrichtung nach einem der Ansprüche 1 bis 10, deren Steuereinheit direkt in eine Steuerungsvorrichtung der IS-Glasmaschine integrierbar ist, derart, dass Geschwindigkeits- bzw. Taktänderungen der IS-Glasmaschine unmittelbar und automatisch in dementsprechende Anpassungen und Änderungen des Bewegungsablaufs der Schubvorrichtung (1) resultieren.

12. Schubvorrichtung nach einem der Ansprüche 1 bis 11, die eine elektronische Drehkraftbegrenzung für die erste (5) und/oder die zweite Antriebsstufe (6) aufweist.

13. Schubvorrichtung nach einem der Ansprüche 1 bis 12, deren Steuereinheit als Eingabeelemente Touch-Screens aufweist.

## Claims

1. A pushing device for transferring glass articles from a station of an IS glass machine to a conveying means, comprising a displacement member (2) which can be brought in contact with the glass articles to be transferred, and by means of which the glass articles can be placed from the station onto the conveying means, actuators (17 to 23) which are directly connected to the displacement member (2), and a drive device (5, 6) by means of which the displacement member (2) can be driven via the actuators (17 to 23), wherein the drive device (5, 6) has a first drive stage (5) by means of which the actuators (17 to 23) directly connected to the displacement member (2) can be driven, and a second drive stage (6) which is arranged next to the first drive stage (5) and by means of which a carrier (16) holding the actuators (17 to 23) that are directly connected to the displacement member (2) can be driven, **characterized in that** the first drive stage (5) has a servomotor (8) that is connected in a gearless manner to a drive member (12) of the actuators (17 to 23) that are directly connected to the displacement member (2), that the second drive stage (6) has a servomotor (9) that is connected in a gearless manner to a drive member (25) of the carrier (16), and that the two drive stages (5, 6) are arranged in a common housing (7).

2. The pusher device according to claim 1, in which the actuators (17 to 23) of the displacement member (2), which actuators are held on the carrier (16), can be continuously rotated by means of the first drive stage (5) in one direction during the transfer of a glass article from the station to the conveying means, and the carrier (16) can be rotated or swiveled by means of the second drive stage (6) during the transfer of a glass article from the station to the conveying means in a first movement phase in the one direction and in a second movement phase in the other, opposite direction, wherein the rotation of the actuators (17 to 23) and the rotation of the carrier (16) during the two movement phases of the latter overlay each other.

3. The pusher device according to claim 1 or claim 2, in which an output shaft (10) of the servomotor (8) of the first drive stage (5) is arranged coaxially in a hollow shaft (11) that is driven by means of the servomotor (9) of the second drive stage (6), is rotatable with regard to said hollow shaft (11), protrudes on the hollow shaft front side remote from the electric motor through said hollow shaft, and is connected in a rotatably fixed manner to a driving gearwheel (12) that forms the drive member (12) of the actuators (17 to 23) that are directly connected to the displacement member (2).

4. The pusher device according to claim 3, in which the driving gearwheel (12) that is rotatably fixed to the output shaft (10) of the servomotor (8) of the first drive stage (5) drives by means of a toothed belt (13) at least two output gearwheels (14, 15), each of which is connected in a rotatably fixed manner to a shaft journal (17, 18) that is connected to the displacement member (2) by means of a crank arm (19, 20).

5. The pusher device according to claim 6, in which the carrier (16) forms a housing for the driving gearwheel (12) of the first drive stage (5), the toothed belt (13), and the at least two output gearwheels (14, 15).

6. The pusher device according to any one of the claims 3 to 5, in which an output shaft (24) of the servomotor (9) of the second drive stage (6) carries in a rotatably fixed manner a driving gearwheel (25) that, by means of a toothed belt (26), is in drive connection with an output gearwheel (27) that is seated in a rotatably fixed manner on the hollow shaft (11).

7. The pusher device according to any one of the claims 3 to 6, in which the hollow shaft (11) is connected eccentrically and in a rotatably fixed manner to the carrier (16), and the latter can be swiveled corresponding to the rotational direction of the output shaft (24) of the servomotor (9) of the second drive stage (6) in the one or the other direction by means of the hollow shaft (11).

8. The pusher device according to any one of the claims 1 to 7, the two drive stages (5, 6) of said device having the same dimensions in their axial and/or radial direction.

9. The pusher device according to any one of the claims 1 to 8, said device being universally mountable on existing IS glass machines.

10. The pusher device according to any one of the claims 1 to 9, said device being configurable as a left and a right embodiment.

11. The pusher device according to any one of the claims 1 to 10, the control unit of said device being directly integratable in a control device of the IS glass machine in such a manner that speed changes or cycle time changes of the IS glass machine result immediately and automatically in corresponding adaptations and changes of the motion sequence of the pusher device (1).

12. The pusher device according to any one of the claims 1 to 11, said device having an electronic torque limitation for the first (5) and/or the second drive stage (6).

13. The pusher device according to any one of the claims 1 to 12, the control unit of said device having touch screens as input elements.

## Revendications

1. dispositif de poussée pour le transfert d'articles en verre, d'une station de machine à verre IS sur un moyen de transport, avec un organe de déplacement (2) pouvant être mis en contact avec les articles en verre à transférer et au moyen duquel les articles en verre peuvent être déplacés de la station vers le moyen de transport, des pièces de positionnement (17 à 23) reliées directement à l'organe de déplacement (2), et un dispositif d'entraînement (5, 6) au moyen duquel l'organe de déplacement (2) peut être entraîné sur les pièces de positionnement (17 à 23), dans lequel le dispositif d'entraînement (5, 6) comporte un premier niveau d'entraînement (5) permettant d'entraîner les pièces de positionnement (17 à 23) reliées directement à l'organe de déplacement (2), ainsi qu'un deuxième niveau d'entraînement (6) agencé à côté du premier niveau d'entraînement (5) et permettant d'entraîner un support (16) supportant les pièces de positionnement (17 à 23) reliées directement à l'organe de déplacement (2), **caractérisé en ce que** le premier niveau d'entraînement (5) comporte un servomoteur (8) relié sans mécanisme de transmission à un organe d'entraînement (12) des pièces de positionnement (17 à 23) reliées directement à l'organe de déplacement (2), **en ce que** le deuxième niveau d'entraînement (6) comporte un servomoteur (9) relié sans mécanisme de transmission à un organe d'entraînement (25) du support (16), et **en ce que** les deux niveaux d'entraînement (5, 6) sont agencés dans un boîtier (7) commun.

2. Dispositif de poussée selon la revendication 1, dans lequel les pièces de positionnement (17 à 23) de l'organe de déplacement (2), maintenues sur le support (16), peuvent tourner en continu dans une direction, au moyen du premier niveau d'entraînement (5), pendant le transfert d'un article en verre de la station vers le moyen de transport, et le support (16) peut tourner ou pivoter dans une direction au cours d'une première phase de mouvement et dans une autre direction opposée au cours d'une deuxième phase de mouvement, au moyen du deuxième niveau d'entraînement (6), pendant le transfert d'un article en verre de la station vers le moyen de transport, dans lequel la rotation des pièces de positionnement (17 à 23) et la rotation du support (16) se superposent pendant les deux phases de mouvement de celui-ci.

3. Dispositif de poussée selon la revendication 1 ou 2, dans lequel un arbre de sortie (10) du servomoteur (8) du premier niveau d'entraînement (5) est agencé de façon coaxiale dans un arbre creux (11) entraîné au moyen du servomoteur (9) du deuxième niveau d'entraînement (6), peut tourner par rapport à l'arbre creux (11), dépasse à travers celui-ci du côté frontal éloigné du moteur électrique, tout en étant lié en rotation à une roue dentée d'entraînement (12) formant l'organe d'entraînement (12) des pièces de positionnement (17 à 23) reliées directement à l'organe de déplacement (2).

4. Dispositif d'entraînement selon la revendication 3, dans lequel la roue dentée (12) liée en rotation à l'arbre de sortie (10) du servomoteur (8) du premier niveau d'entraînement (5) entraîne au moins deux roues dentées de sortie (14, 15) au moyen d'une courroie dentée (13), chacune d'elles étant liée en rotation à un tourillon d'arbre (17, 18) relié à l'organe de déplacement (2) au moyen d'un bras de manivelle (19, 20).

5. Dispositif de poussée selon la revendication 6_{[TS1]}, dans lequel le support (16) forme un boîtier pour la roue dentée d'entraînement (12) du premier niveau d'entraînement (5), la courroie dentée (13) et les au moins deux roues dentées de sortie (14, 15).

6. Dispositif de poussée selon l'une des revendications 3 à 5, dans lequel un arbre de sortie (24) du servomoteur (9) du deuxième niveau d'entraînement (6) porte une roue dentée d'entraînement (25) solidaire en rotation, laquelle est reliée par entraînement à une roue dentée de sortie (27) montée en rotation solidaire sur l'arbre creux (11), au moyen d'une courroie dentée (26).

7. Dispositif de poussée selon l'une des revendications 3 à 6, dans lequel l'arbre creux (11) est reliée de façon excentrée et solidaire en rotation au support (16), et celui-ci peut pivoter dans un sens et dans l'autre au moyen de l'arbre creux (11), selon le sens de rotation de l'arbre de sortie (24) du servomoteur (9) du deuxième niveau d'entraînement (6).

8. Dispositif de poussée selon l'une des revendications 1 à 7, dont les deux niveaux d'entraînement (5, 6) présentent les mêmes dimensions dans la direction axiale et/ou radiale.

9. Dispositif de poussée selon l'une des revendications 1 à 8, apte à être monté universellement sur des machines à verre IS existantes.

10. Dispositif de poussée selon l'une des revendications 1 à 9, apte à être conçue comme une forme de réalisation de gauche et de droite.

11. Dispositif de poussée selon l'une des revendications 1 à 10, dont l'unité de commande peut être intégrée directement dans un dispositif de commande de la machine à verre IS, de sorte que les changements de vitesse ou de cadence de la machine à verre IS résultent immédiatement et automatiquement dans des adaptations et modifications correspondantes du trajet de déplacement du dispositif de poussée (1).

12. Dispositif de poussée selon l'une des revendications 1 à 11, comportant un moyen de limitation électronique de la force de rotation pour le premier (5) et/ou le deuxième niveau d'entraînement (6).

13. Dispositif de poussée selon l'une des revendications 1 à 12, dont l'unité de commande comporte des écrans tactiles en tant qu'éléments de saisie.
